# EUROPEAN PATENT APPLICATION

(11) **EP 1 604 797 A1**
(43) Date of publication of application: **14.12.2005**
(21) Application number: 04425423.3
(22) Date of filing: 10.06.2004
(51) Int. Cl.: B29C 45/14, B62D 1/06, B29C 33/14, B29C 51/28, B29C 51/14, B29C 51/00

(54) **Decorative elements for motor vehicle interiors, process and molds for their production**

(71) Applicant: KEY SAFETY SYSTEMS, INC., Sterling Heights, Michigan 48314 (US)
(72) Inventor: Menaldo, Lorenzo, 37069 Villafranca (VR) (IT); Testa, Giuseppe, 37031 Illasi (VR) (IT); Ridolfi, Adolfo, 37039 Tregnago (VR) (IT); Salvoro, Roberto, 37039 Illasi (VR) (IT)
(74) Representative: Gislon, Gabriele

(57) **Abstract**

A process of producing decorative elements for car interiors, comprises the steps of pre-forming a sheet (5) of flexible veneer material under pressure and heath, positioning the pre-formed sheet in a half-mold (2) of an injection mold comprising a cavity (4); holding the sheet (5) in position on the half-mold (2), closing said mold and injecting into the cavity one or more thermoplastic materials on the back of the veneer sheet (5) to provide a support layer (6).

## Description

The present invention relates to decorative elements for motor vehicle interiors, as well as to a process and devices for their production. In particular, the invention refers to laminated decorative elements comprising one external veneer layer of wood, fabric, leather, carbon fiber fabrics, other decorative materials and at least one support layer in resin. The term decorative elements for motor vehicle interiors refers to steering wheel shells, handles and gear-change lever knobs and inserts for door interior panels, dashboards and similar. More particularly, the invention relates to wood veneer shells for steering wheels.

In the automotive field the demand for decorative parts or elements, in particular in wood, is high and continues to rise. To produce decorative parts it is known to cover an aluminum or plastic core with a layer of wood or other decorative layer that is glued and finished (sanded and varnished if it is wood) manually.

In order to reduce the time required by such manual operations, techniques have been developed that produce laminated shells in a one-step process with a layer in wood and a supporting layer in thermosetting resin. A disadvantage of this technique is that pieces with hooks, locking rims and other mechanical attachment means cannot be produced. Another disadvantage is the long production times.

US-A-5,792,302 describes a process for the production of steering wheels with a wooden surface layer. According to this document, two layers of wood are pre-formed in two half-shells that are placed in one mold with the metal armature of the steering wheel. An expansion resin is then injected into the space between the metal armature and half-shells, according to the RIM (Reaction Injection Molding) technique, in order to force the half-shells against the mold and bond them together. Alternatively, two half-shells already supplied with the expanded resin portion are produced separately and glued to the metal armature of the steering wheel. This technique has several drawbacks in that: pieces with means of attachment or locking rims or undercuts cannot be produced During the foaming (RIM) step excesses are formed that have to be removed by hand, and the pre-forming and RIM molding times are particularly long, reaching 40 minutes each. Moreover, like in the thermosetting-resin molding technique, it also requires a manual finishing step.

It is an aim of the present invention to solve the aforementioned problems and provide a process and a device to produce decorative elements with a veneer layer of wood, fabrics or other decorative materials, in a reliable and economic way that gives very good aesthetic results and that reduces the manual finishing times.

Such scope is achieved by the present invention, which relates to a process for the production of decorative elements for vehicle interiors having a veneer layer, characterized by comprising the following steps:
- positioning a sheet having a veneer layer in a half-mold of an injection mold comprising a cavity;
- holding said sheet in position on the said half-mold;
- closing said mold and injecting one or more thermoplastic materials into said cavity of the closed mold, on the back of the said decorative sheet.

According to a preferred aspect of the invention, the veneer layer sheet comprises one layer of wood veneer or other decorative material bonded to one layer of thermoplastic material and where necessary a further layer of woven or non-woven fabric.

According to a further aspect of the invention, the veneer layer sheet is pre-formed prior to the thermoplastic-material injection step.

During the first steps of the production process, e.g. during mold-closing or at the beginning of the injection step, the veneer layer sheet is held in position against the respective half-mold. This holding in position action can be carried out with retaining means such as jacks, struts, needles or similar moving elements, or by the mentioned pre-forming of the veneer layer. If the layer is pre-formed accurately, it already has a shape that is almost the final one and will therefore fit snugly in the half mold without requiring any mechanical means. If mechanical means are required, such as those previously mentioned, they project from the half mold that does not house the veneer layer and are mobile between an extended position and a retracted position; the force applied by said projecting elements to the covering sheet is such as to maintain the sheet in position at least during the initial step of the molding process. Thus, for the present invention the wording "holding in position" refers to both the above ways: only through the shape or with mechanical means.

According to a further aspect of the invention, a varnish or a coating layer is injected on the side of the cavity that corresponds to the face of the decorative sheet, after the thermoplastic-material injection step.

A further aspect of the invention is a mold for pre-forming the decorative elements, comprising two half-molds, a cavity and an inflatable means of pressure positioned in one of said half-molds.

A further aspect of the invention is a decorative element as obtainable with the process described above, characterized by comprising a veneer layer, at least one layer of thermoplastic material, and means of attachment and/or undercuts provided into said thermoplastic material.

A still further aspect of the invention are steering wheel shells having a veneer layer as obtainable according to the invention process.

Preferably, the decorative elements obtained according to the invention comprise a first layer of thermoplastic glued to the decorative material layer and a second layer of thermoplastic injected onto the said first layer. A layer of fabric or non-woven fabric is bonded externally to the layer of thermoplastic glued to the decorative material layer in order to improve flexibility and the adhesion of the injected material on the decorative portion.

The invention shows several advantages over the prior art.

The invention solves the problem for open and closed shape parts in steering wheels shells lowering the cost of production.

The invention enables the production in one-shot co-molding process of decorative elements with a wood, leather or fabric finish, already provided with undercuts, rims and means of attachment such as hooks and similar, as necessary for their final use. The pre-forming and molding times are reduced and the temperature and pressure requirements are moderated.

The process is simple and reliable and the parts produced are aesthetically very attractive. Moreover, by co-molding by injection molding the thermoplastic support a "net shape" part is obtained, i.e. no machining is required to achieve the final shape of the part.

The invention will now be described in more detail with reference to the attached drawings which are by way of example and not limiting, wherein:
- fig. 1 is a perspective view in partial section of two half-shells according to the invention;
- figs. 2, 3 and 4 are schematic cross sectional views of the process of molding half-shells according to the invention;
- fig. 5 is a schematic cross sectional view of a liner sheet to be used in the process according to the invention;
- fig. 6 is a partially magnified cross sectional view of the bonded half-shells of fig. 1;
- figs. 7 and 8 are schematic cross sectional views of a pre-forming mold during two steps of the pre-forming process;

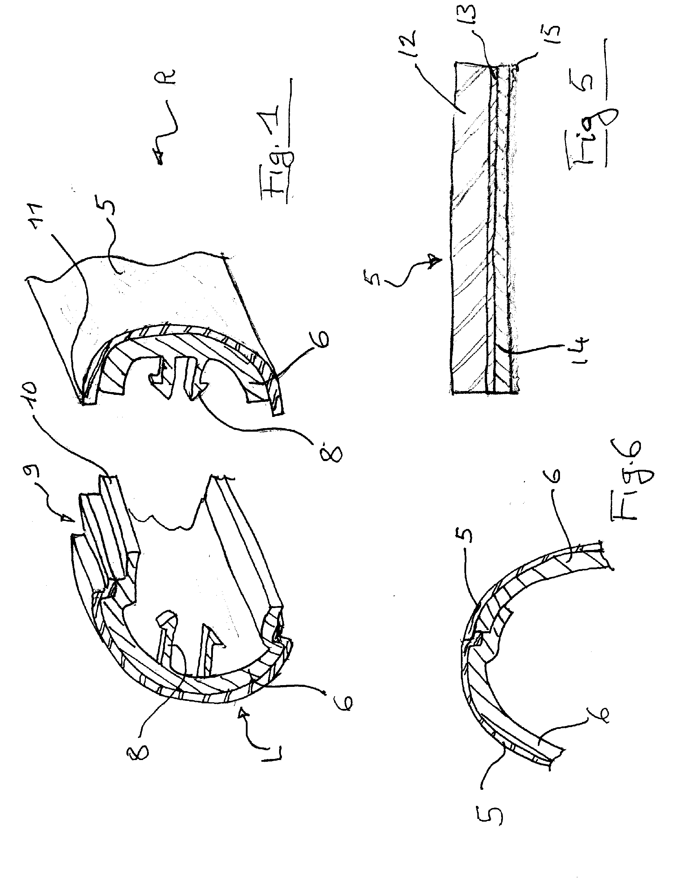

With reference to figures 1-5, the mold 1 according to the present invention comprises in a known way two half-molds 2, 3, which when closed define a shaped cavity 4 according to the design of a decorative element for car interiors, such as for example knobs for gear-change levers and shells for steering wheels, an insert for a dashboard or an interior panel for the door. In the embodiment shown and discussed hereafter, reference is made to a pair of half-shells for steering wheels, but the same remarks are valid for other decorative elements. Similarly, the decorative element disclosed hereinafter is provided with a wood veneer, but instead of wood, the veneer could be made of fabric, e.g. carbon fibers fabric or aramid fibers, leather and other materials.

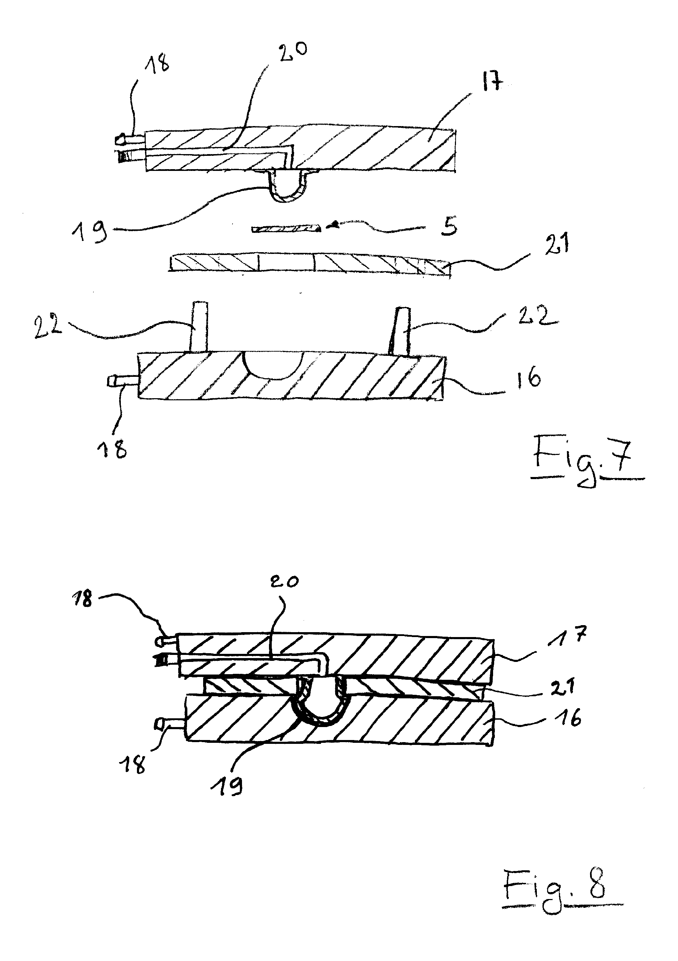

According to the present invention, a layer 5 of wood or of a thermoplastic material and wood, is placed in the mold, held (i.e. maintained) in position and a layer of thermoplastic material 6 is injected onto the back of the layer 5. In order to maintain layer 5 in position during the closing of the mold and to prevent it from moving outside that position, in one embodiment of the invention the mold is provided in a known way with means of retaining position. In figures 2-4 such means of retaining position are exemplified by retractable small rods or needles 7, which move between an extended position with the mold open (fig. 2), a partially retracted one at the beginning of the injection step, and a retracted one, in which they are positioned when the injection of thermoplastic support material is partially completed (fig. 4).

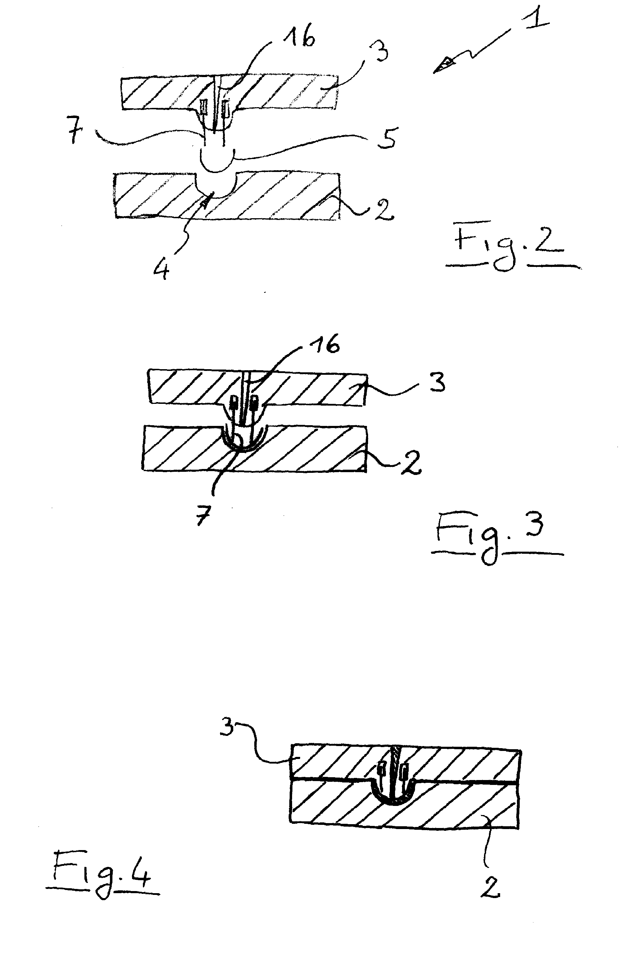

Fig. 3 shows the mold-closing step, in which rods 7 hold in position the half-shell 5 in its respective half-mold 2 before being retracted in the last step of the injection molding process. Alternatively, other known means such as for example needles, clips, suction pads, temporary adhesives can be used to hold in position the veneer layer sheet 5.

More in general, the injection molding conditions are those used in the technique known as "In Mold Labeling (IML)" or "In Mould Dekorieren (IMD)" and involve low injection pressures; in the invention process injection pressures are related to the dimension of the decorative element.

For example, injection molding of wood veneered steering wheel rim sectors, using 30% glass reinforced Polyammide, is carried out at a pressure within the range of 1.100 and 1.500 Kg/cm², depending upon the shell length. In spite of the injection pressure being relatively low, the pressure is however sufficient to press the sheet 5 against the half-mold 2 and to give the sheet or layer 5 the desired shape and dimensions. Thermoplastic materials suitable for injection molding of layer 6 are polyolefins and polypropylene in particular, polyamides, ABS and vinyl polymers.

As above mentioned, the half-mold 3 is designed to mold hooks 8 or similar means of attachment of the half-shell to the steering wheel, dashboard or panel, as well as reinforcing ribs and other structural elements as required. In the embodiment shown in fig.1 the two half-shells L and R are shown for covering steering wheels all the way round their circumference, i.e. for 360°. To enable an overlap without showing gaps, the half-shell L is provided with a locking step 9 and with a portion 10 of the thermoplastic layer of 6 protruding with respect to the sheet of wood 5. The corresponding half-shell R presents a portion 11 of the sheet 5 that projects beyond the injected thermoplastic layer 6 in order to provide a complementary shape to the locking step 9. Once the half-shells L and R are joined, as shown in fig. 6, a portion 10 of layer 6 of the half-shell L overlaps layer 6 of the half-shell R; the two half-shells can be welded by ultrasonics, vibration, "hot gas" and other known techniques of welding thermoplastic. In this way, the use of adhesives and the problems connected with such use are avoided.

The half-mold 3 is provided with one or more nozzles 16 for injecting the thermoplastic layer. In the simplest embodiment shown in figures 1-5, sheet 5 is backed by a support layer consisting of one thermoplastic material If the dimensions of the sheet are reduced one nozzle may be sufficient, but it is often preferred to inject through two or more nozzles in order to use low injection pressures, as is well known in the art of injection molding. The nozzles can feed one or more thermoplastic materials according to the type of decorative element being produced. As an example, different materials can be injected in various points of the mold to give a portion of decorative element where the veneer is a wood sheet and a portion where the "veneer" is an imitation leather thermoplastic material, that was injection molded in that area.

The technique of using different injection molding materials is known and used in the production of car trim panels and will make possible e.g. car dashboards and door panels to be produced, in which the wooden sheet is bonded to the panel as a single piece.

It is also possible to use the invention's laminates to produce panels or other products having a "simple" shape by compression molding; with this method the decorative material, possibly or preferably pre-formed, is shaped and bonded to a supporting layer of thermoplastic material by compression in a mold.

The wood or other material veneer sheet 5, on the back of which the thermoplastic 6 is injected, is sufficiently flexible to be initially pre-formed and to be later imparted the final shape, completely, as a result of the of injection molding step. Such a sheet 5 could be of wood alone, but it is preferable to use a laminate of thermoplastic and wood or thermoplastic and fabric or leather or other material.

Fig. 5 shows an example of such a laminate, with a wood veneer.

Sheet 5 of fig. 5 comprises a layer of wood 12 (but other materials may be used) bonded by means of a thin layer of glue 13 to a film of thermoplastic material 14 that ensures the necessary flexibility. In other embodiments of the sheet 5, a woven or non-woven fabric 15 is glued externally to film 14 or, alternatively, the fabric 15 is bonded directly to the layer of wood 12 and thermoplastic film 14 is bonded to the fabric. The product thus obtained is flexible and resistant to stretching and can be easily pre-formed into the desired shape without the wood veneer surface cracking. The laminate and flexible sheets 5 are known in the art, and are described, for example, in EP-B-0376993, US-A-4430371, USA-4205107 and commercially available.

The thickness of the wood veneer 12 is between 0,1 and 1,2 mm and preferably between 0,4 and 0,8 mm; the adhesive has a minimal thickness, for example around 0,01-0,05 mm, and the sheet or film of thermoplastic has thickness of between 0,05 and 0,8 mm and preferably between 0,05 and 0,4 mm. Suitable adhesives are hot-melt adhesives, for example vinyl or polyester, and acrylic or neoprene adhesive. Materials for the thermoplastic film are selected from PVC, polyolefins, ABS and similar materials suitable to provide a flexible support.

As previously mentioned, by using the flexible laminates in particular those having a wood veneer, above described, it is possible to produce by injection or compression molding decorative elements for car interiors that range from gear lever knobs to steering wheels and from door panels to dashboards.

Therefore, an advantage of the invention is the use of flexible laminates having a thickness of 1.8 mm or less, comprising one veneer layer and at least one layer of thermoplastic material, for the production of decorative elements for car interiors. The use of flexible laminates having a wood veneer is particularly advantageous in view of the resulting easy and simple production process.

Figures 7 and 8 illustrate a mold for pre-forming the laminates according to the invention. Such a mold comprises two half-molds 16, 17 that define in a known way a cavity that has the shape required. The two half-molds are provided with a means of regulating the temperature, such as e.g. a circuit for oil, to increase and to reduce the temperature in the shortest possible time. Such means are schematically shown with reference 18.

A half-mold 17 is provided with a projecting portion 19 that comprises the male portion of the mold and that is housed in the cavity of the half-mold 16 when the mold is closed. This projecting portion 19 is formed by expandable means that can increase its volume; in the preferred embodiment the expandable means is a "balloon", i.e. inflatable means that can be pressurized to increase its volume. To pressurize balloon 19 is connected to a duct 20, that is connected to a source of pressure, e.g. of compressed air (not shown).

Fig. 7 also shows an insert 21 that is located between the two half-molds 17, 16 in order to form a locking step or rim. The insert 21 has a recess 22 therein that corresponds to the shape of the cross-section of the cavity of the half-mold 16, but with smaller area. When the insert 21 is positioned on half-mold 16, a step is formed that will produce the required locking rim.

The operation of the pre-forming mold is as follows.

The insert 21 is positioned on the half-mold 16 by means of guides 22 present on the half-mold 16. Then a sheet 5, cut to the desired size and shape, is positioned in the cavity of the half-mold 16 from above i.e. through an insert 21. The mold is closed and by closing the mold the balloon 19 is inserted into the cavity of the half-mold 16, through the insert 21. Then, the half molds 16, 17 are heated and the balloon 19 is pressurized by feeding compressed air through a conduit 20. The balloon 19 is inflated until it occupies substantially all the cavity and presses a sheet 5 against the walls of the half-mold 16 and a part of insert 21. By the combined action of heat and pressure a laminate sheet 5 is formed into a shape that can be very close to the final one. In fact, it is possible to obtain parts pre-formed so well that in the following co-molding step there is no need for additional retaining means to retain the sheet 5 in the injection mold.

When the sheet 5 is of the type laminated with a thermoplastic film, the temperature of the half molds 16, 17 has to be lower than the melting point or degradation temperature of the glue present in the laminate, while trying to make pre-forming cycles as fast as possible. For the sheets used for the present invention the temperature used is between 50 and 200 °C and preferably between 55 and 100 °C; the pressure is between 4 and 6 bars, usually approximately 5 bars and the cycle time between 3 and 60 seconds.

It has been found that the same mold and the same process can be used for the mold preparation of products in carbon fiber; in this case the times are of approximately 20 minutes and the pressure used is approximately 3-4 bar, with a temperature between 70°C and 180°C, applied in different steps, depending upon the dimension and the shape of the decorative element.

The above described pre-forming mold and the process of pre-forming that uses means of inflation 19 are also advantages of the invention.

The step of pre-forming is advisable or necessary for those products with complex shapes such as shells for steering wheels or knobs for gear-change levers. Products with simpler shapes can be formed directly in the mold by "In Mould" injection molding.

The invention will now be further disclosed with reference to the following example.

### Example.

A flexible laminate comprising a wood veneer layer 0.75 mm thick, a thermoplastic material layer 0.21 mm thick and a backing fabric layer, having a total thickness of 1,1 mm is cut to an arched shape of 130 degrees. The thus cut laminate is preformed in a pre-forming mould as above disclosed for 50 sec at 90 °C and 4.8 bar (pressure of the fluid fed to the inflatable "balloon"). The pre-formed laminate was then positioned in a mold and retained in position by suction means. A 30% fiberglass reinforced polyamide was injected on the back of the laminate to give a half shell with a perfect shape and without cracks of the wood layer. The injected supporting layer of thermoplastic material is provided with integral hooks for mounting on the steering wheel structure. After finishing and light sanding the shell is lacquered and polished to give an excellent decorative element that can be fit to a steering wheel.

Returning to the "In Mould" molding step of the pre-formed sheet, it has been mentioned that this allows hooks, webbing and similar details to be obtained in a single piece. Moreover, the invention also makes possible to directly paint the part in the mold for injection molding, according to the known "In-mold paint" techniques, such as by injection either of a transparent polyurethane varnish or of a coating layer.

## Claims

1. A process of producing decorative elements for car interiors, **characterized by** comprising the following steps:
- positioning a sheet (5) of flexible veneer material in a half-mold (2) of an injection mold comprising a cavity;
- holding said sheet (5) in position on the said half-mold (2);
- closing said mold and injecting into said cavity one or more thermoplastic materials on the back of the said sheet (5) to provide a support layer (6).

2. A process according to claim 1, wherein said sheet (5) comprises a veneer layer bonded to a film of thermoplastic material (14) and/or to a fabric (15).

3. A process according to claim 1 or 2, wherein said sheet (5) is pre-formed in a pre-forming mold (16,17,21) before said step of injection molding.

4. A process according to any claim 1 to 3, wherein said veneer layer (12) is a wood veneer layer.

5. A process according to any previous claim, wherein means of attachment of the decorative element are molded integral with said injected support layer (6).

6. A process according to any previous claim, wherein said decorative element are selected from wood, fabrics, carbon fibre, aramid fibre, leather or any other possible decorative material.

7. A process according to any previous claims, further comprising an "In-Mould Paint" step.

8. A decorative element as obtainable with a process according to any previous claim, **characterized by** comprising a sheet (5) of flexible veneer material having a veneer layer (12) bonded to a film of thermoplastic material (14) and/or a fabric layer (15), said fabric (15) or said thermoplastic film (14) being bonded with one layer of thermoplastic material (6) produced by injection molding.

9. A decorative element according to Claim 7, **characterized by** being a shell (L, R) for a steering wheel.

10. A decorative element according to claim 8 or 9, wherein said veneer layer (12) is a wood veneer.

11. A mold for pre-forming sheets (5) of flexible veneer material for car interiors, **characterized by** comprising two half-molds (16, 17) defining a cavity, expandable means located on one (17) of said half-molds and projecting into said cavity when the mold is closed, and means (20) of expanding said expandable means and causing it to occupy substantially all said cavity.

12. A mold according to claim 10, further comprising at least one insert for the production of undercuts, steps and locking rims.

13. Use of flexible laminates comprising one wood veneer layer (12) and at least one layer (14) of thermoplastic material, for the production of decorative elements for car interiors.
